# EUROPÄISCHE PATENTANMELDUNG

(11) **EP 2 221 572 A2**
(43) Veröffentlichungstag der Anmeldung: **25.08.2010**
(21) Anmeldenummer: 10001372.1
(22) Anmeldetag: 11.02.2010
(51) Int. Cl.: F41H 7/03

(54) **Sondenhalterung für ein Fahrzeug bzw. Objekt**

(30) Priorität: 21.02.2009 DE 102009010082
(71) Anmelder: Rheinmetall Landsysteme GmbH, 24107 Kiel (DE)
(72) Erfinder: Gerlach, Klaus-Peter, 34302 Guxhagen (DE); Stulgies, Baldur, 34359 Reinhardshagen (DE); Bräutigam, Martin, 34117 Kassel (DE); Ludwig, Stefan, 34125 Kassel (DE)
(74) Vertreter: Dietrich, Barbara

(57) **Zusammenfassung**

Vorgeschlagen wird eine Sondenhalterung (1) an einem ABC oder AC-Fahrzeug (11) bzw. Objekt zur Aufnahme wenigstens eines Sensors (3) und / oder einer Sonde (2) zur Messung von A(B)C-Kontaminationen, die sich dadurch auszeichnet, dass sie und somit der / die Sensor(en) (3) bzw. die Sonde(n) (2) in drei unterschiedlichen und unabhängig voneinander beweglichen Freiheitsgraden verstellt werden können und somit verschiedene Betriebszustände für das Messen mit dem Sensor (3) bzw. mit der Sonde (2) mit einer Halterung (1) angefahren werden können. Die Sonde (2) dient dabei beispielsweise zum Luftspüren und (großflächigen) Bodenspüren mit den besonderen Ausführungen Punktspüren und Radspüren, der Sensor (3) zur Messung der Bodentemperatur.

## Beschreibung

Bekannt sind Spürfahrzeuge für das Aufspüren von nuklear, biologisch und / oder chemisch kontaminierter Luft oder Boden. Diese Spezialfahrzeuge werden von speziell ausgebildeten Personen bedient. Ein mit dem Namen "Fuchs" bekannter Spürpanzer der Anmelderin ist der Internetseite http://www.rheinmetall-detec.de/index.php?lang=2&fid=3358 entnehmbar.

Derartige ABC-Spürfahrzeuge weisen in der Regel am Heck des Fahrzeuges eine Radkonstruktion mit in der Regel zwei Spürrädern zum Aufsammeln von chemischen auf, die dann angehoben, einer Sensoreinrichtung zugeführt werden. Im Radspürmodus werden die mit Silikon beschichteten Spürräder hinter dem fahrenden Fahrzeug hergezogen. Weitere Aufgaben einer Sensoreinrichtung sind zudem das Luft- und Punkt- bzw. Bodenspüren. Insbesondere das Punktspüren wird derzeit von Hand bewerkstelligt. Zur Verstellung der Sondeneinheit (z. B. eines Massenspektrometers) muss eine mechanische Arretierung per Hand gelöst werden, um dann die Sonde in die gewünschte Position (Luftspüren, Radspüren) zu überführen. Danach wird die Sonde wieder arretiert. Im Falle des Bodenspürens ist die Sonde mit einem konstanten Bodenandruck zum Boden auszurichten. Dazu muss der Bedienperson im Heckteil des Fahrzeuges Platz gelassen werden.

Es sind Bestrebungen bekannt, zumindest einen Bodensensor aus dem Heckteil eines Fahrzeuges senkrecht nach unten zu bewegen.

Der Erfindung stellt sich die Aufgabe, eine Sondenhalterung zu konzipieren, die selbst einen geringen Platz benötigt und ein automatisches Messen von zumindest A und C kontaminierte Proben / Flächen aus dem Objekt bzw. Fahrzeug heraus ermöglicht.

Gelöst wird die Aufgabe durch die Merkmale des Patentanspruchs 1. Vorteilhafte Ausführungen sind in den Unteransprüchen aufgezeigt, die insbesondere konstruktiv bevorzugte Einzelheiten widerspiegeln.

Der Erfindung liegt die Idee zugrunde, eine dreh- und verschwenkbare Sensor- / Sondeneinheit zur Aufnahme wenigstens eines Sensors bzw. einer Sonde einzubinden. Diese dreh- und schwenkbaren Sensor- / Sondeneinheit ersetzt diese manuelle Handhabung und wird je nach Aufgabe / Messung in die entsprechenden Positionen gefahren.

Vorgeschlagen wird eine Sondenhalterung an einem ABC-Fahrzeug bzw. Objekt zur Aufnahme wenigstens eines Sensors und / oder einer Sonde zur Messung von ABC-Kontaminationen, die sich dadurch auszeichnet, dass sie und somit der / die Sensor(en) bzw. die Sonde(n) in drei unterschiedlichen und unabhängig voneinander beweglichen Freiheitsgraden verstellt werden können und somit verschiedene Betriebszustände für das Messen mit dem Sensor bzw. mit der Sonde mit nur einer Halterung angefahren werden können. Die Sonde dient dabei beispielsweise zum Luftspüren und (großflächigen) Bodenspüren mit den besonderen Ausführungen Punktspüren und Radspüren, der Sensor zur Messung der Bodentemperatur

Zur Messung in der Radspürstellung wird die Sonde an das Spürrad verschwenkt, für das Positionieren des Spürrads und der Fanggabel in der Radwechselstellung wieder in eine neutrale Stellung gebracht. Die Dreh- und Schenkeinheit dient somit für das Positionieren der Sonden zum Radspüren, zum Punktspüren, für das Luftspüren und für das Temperaturspüren. Für das Punktspüren wird die Einheit bzw. die Luft- Bodensonde dicht an den Untergrund herangeführt und je nach Sensor- bzw. Sondentyp ein konstanter Anpressdruck aufgebracht. Vorteilig ist auch, dass nunmehr ein konstanter Bodenandruck besser erzeugt werden kann, wenn die Sonde zum Boden ausgerichtet wird. Für das Luftspüren wird die gleiche Sonde in einem Abstand zum Untergrund gebracht. Die Informationen der Sensoren bzw. Sonden werden in bekannter Art und Weise einer Auswerte- und Verarbeitungsvorrichtung in Signalform zugeführt.

Durch diese Maßnahme kann in Weiterführung des grundsätzlichen Gedankens, nämlich der Schaffung eines Hecks ohne Durchbrüche eine fernbedienbare Spürradwechseleinrichtung eingebunden werden. Neben der Platzeinsparung im Fahrzeug und den wegfallenden Durchbrüchen am Heck, die Leckageprobleme mit sich bringen können, wird des Weiteren der
ballistische Schutz in diesem Bereich erhöht. Aus ergonomischen Gesichtspunkten ergibt sich eine bessere Arbeitsmöglichkeit für den Bediener, er muss nicht mehr auf dem Boden des Fahrzeugs liegen und es kommt auch nicht mehr auf eine notwendige Armlänge des Bedieners an.

Anhand eines Ausführungsbeispiels mit Zeichnung soll die Erfindung näher erläutert werden. Es zeigt:
- Fig. 1: eine dreh- und verschwenkbare Sondenhalterung in einer Neutralposition am Heck eines Fahrzeuges,
- Fig. 2: die verstellbare Sondenhalterung mit Sonden und Sensoren in Funktionsstellung,
- Fig. 3: eine am Heck des Fahrzeugs eingebundene Spürradwechselvorrichtung.

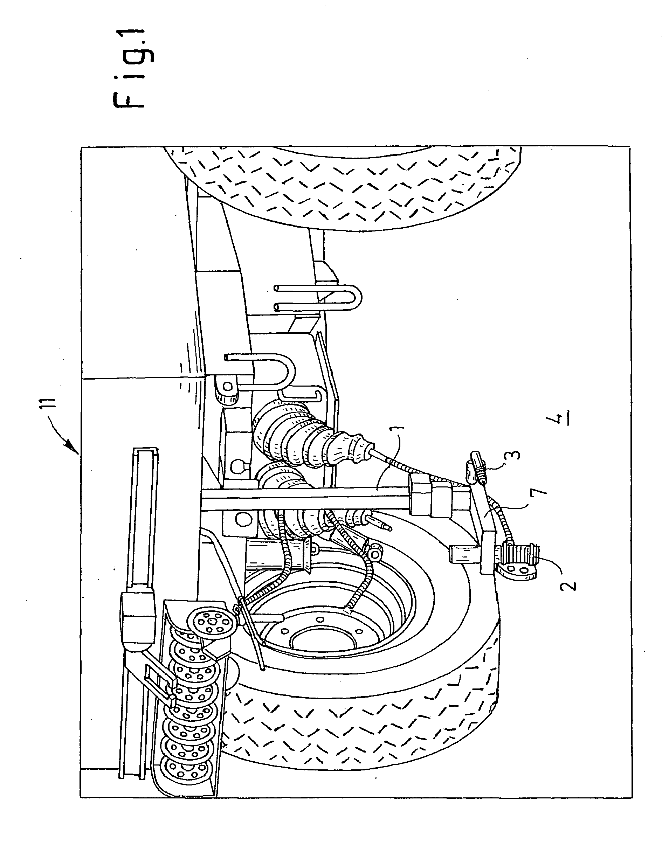

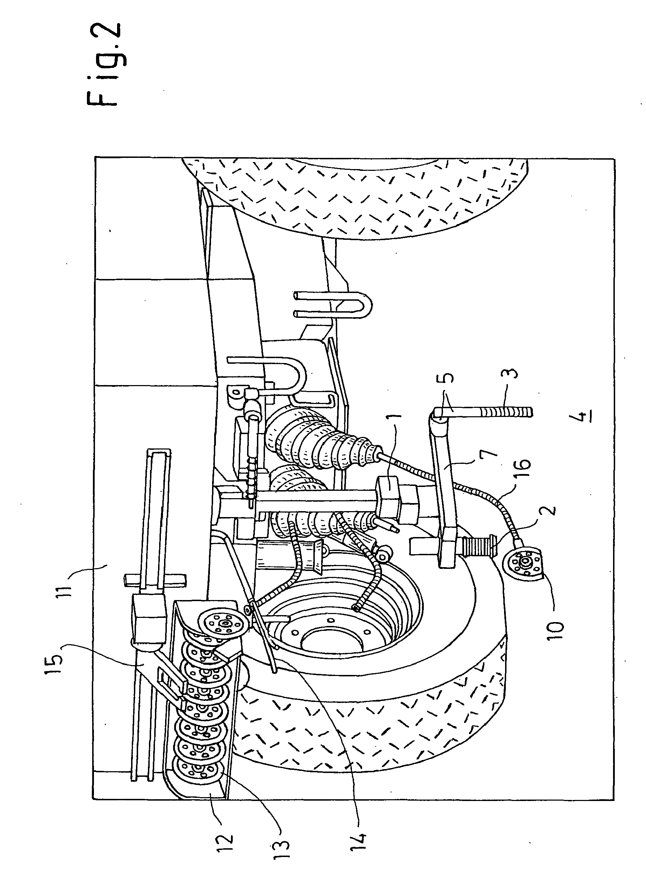

In Fig. 1 (Fig. 2 ebenfalls) ist eine dreh- und schwenkbare Sondenhalterung 1 zur Aufnahme von Sonden 2, 3 dargestellt. Der Bodentemperatursensor 3 ist seinerseits selber schwenkbar gehalten, kann aber auch durch ein anderes Verfahren zum Boden gefahren werden (z. B. linear nach unten). Die Dreh- und Schwenkeinrichtung 1 lässt sich in drei unterschiedlichen und unabhängig voneinander beweglichen Freiheitsgraden verstellen. Die Höhenverstellung geschieht durch eine Linearführung, mit der vier Betriebszustände angefahren werden können:
1. Fahrt ohne Messung (Transportstellung bzw. Neutralposition)
2. Luftspüren (während der Fahrt und im Stand)
3. Großflächiges C-Bodenspüren = Radspüren (während der Fahrt)
4. Punktspüren (im Stand).

In der Transportstellung ist der Sondenkopf in der obersten Position eingezogen. Zum Luftspüren verlässt der Sondenkopf den Heckanbau eines Fahrzeuges oder eines Objektes 11, sodass die Umgebungsluft den Sondenkopf ohne Beeinträchtigung erreichen kann. Zum großflächigen Bodenspüren wird der Sondenkopf in etwa auf halbe Höhe herabgelassen.

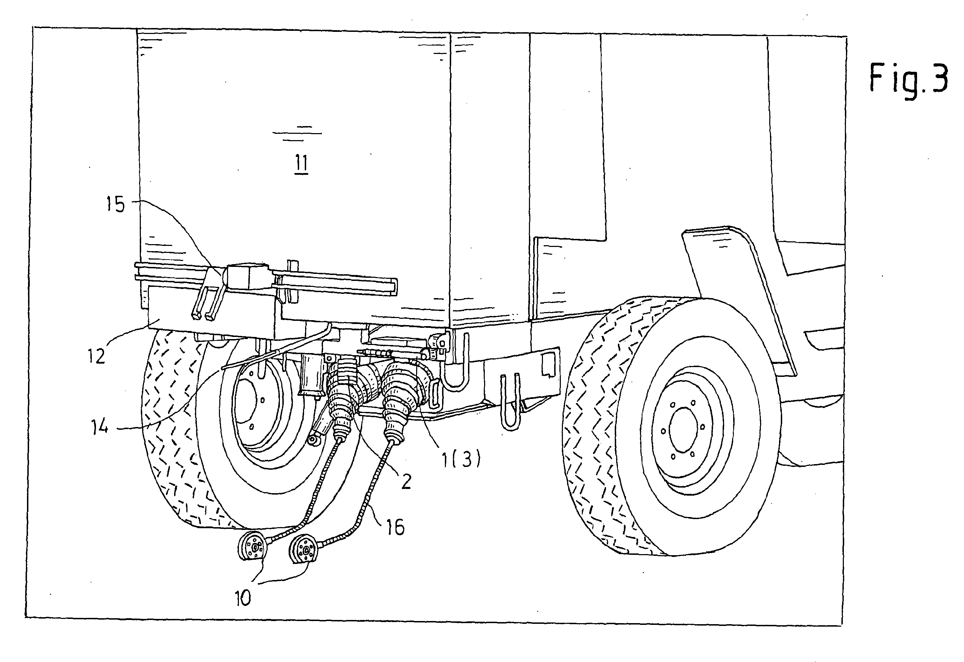

In der Radspürstellung kann die Sonde 2 beim Einsatz von Spürrädern 10 (Fig. 3) von beiden angefahren werden. Zum Punktspüren wird die Sonde 2 bis auf den Boden 4 ausgefahren und auf diesen aufgesetzt. Prinzipiell kann die Sonde 2 vor dem Aufsetzen über horizontale Verstellmöglichkeiten parallel zum Boden 4 verschoben werden. Die Bewegung des Sondenkopfes in der Ebene parallel zum Boden geschieht durch eine Rotation um die z- Achse, wobei zusätzlich der Abstand von der z-Achse geändert werden kann. Durch die Kombination dieser beiden Bewegungen kann die Sonde 2 an jedem Ort innerhalb einer Fläche, beispielsweise bis zu 1m² senkrecht auf den Boden 4 aufgesetzt werden, ohne dass das Fahrzeug selbst dazu bewegt werden muss. Gesteuert werden kann die Sondenbewegung aus dem Fahrzeug 11 oder Objekt heraus von verschiedenen Bedienplätzen. So zum Beispiel vom Arbeitsplatzrechner des Kommandanten oder vom Spürer. Eine gute Einsicht auf das zu untersuchende Gebiet und die Sonde 4 sowie die Radwechslung selbst wird durch wenigstens eine Kamera, bevorzugt zwei, unterstützt. Der Anpressdruck des Sondenkopfes auf den Boden kann vom Benutzer reguliert und durch das System überwacht werden.

Am der Sonde 2 gegenüberliegenden Ende der Quertraverse 7 ist der Bodentemperatursensor 3 angebracht. Für eine Messung der Bodentemperatur wird die Verstelleinrichtung 1 in die unterste Position, knapp über das Bodenniveau gefahren und der Sensor 3 mit einer geeigneten Vorrichtung 5 weiter abgesenkt (beispielsweise durch Verschwenken). Wenn der Kontakt mit dem Boden 4 ausreichend ist, beendet beispielsweise ein integrierter Endschalter den Absenkvorgang.

Am Fahrzeug 11 ist des Weiteren ein Spürradmagazin 12 zur Vorratslagerung von Wechsel-Spürrädern 13 angebracht. Eine Fanggabel 14 befindet sich in einer neutralen Position. Vorzugsweise oberhalb des Magazins 12 ist eine Radwechseleinheit 15, hier in Neutralposition dargestellt, angeordnet. Die Radwechseleinheit 15 ist vorzugsweise ein Greifer, insbesondere ein Parallelgreifer. Die Spürräder 10 sind lösbar an einer Achse einer schwenkbaren Spürradhalterung bzw. eines schwenkbaren Spürradarms 16 befestigt. An diese wird die Sonde 2 im Radspürmodus verbracht, die Messung erfolgt herkömmlich.

Zum Wechseln eines kontaminierten Spürrades 10 wird die Fanggabel 2 in die Radwechselposition überführt, d.h., hoch geschwenkt, und arretiert. Beispielsweise beim Hochschwenken des Rades 10 wird dann ein Kugelsperrbolzen oder dergleichen an der Kante (beispielsweise ein abgeschrägtes Blech) entriegelt, wodurch die beiden Kugeln, die das Spürrad 10 sonst auf der Achse festhalten, versenkt werden und das Rad 10 frei auf der Achse des Spürradarmes 16 liegt. Der Greifer 15 positioniert sich über dem Spürrad 10, schwenkt ab und greift das Rad 10 vorzugsweise an seiner Felge. Anschließend zieht er das kontaminierte Rad 10 von der Achse und lässt es in der einfachsten Ausführung fallen. Alternativ kann das Rad 5 auch in einem Behälter am Heck aufgefangen werden (nicht näher dargestellt).

Zum Aufsetzen eines neuen Rades 10' aus dem Spürradmagazin 12 wird der Greifer 15 über diesem Magazin 12 so positioniert, dass dieser vorzugsweise das nächstliegende Spürrad 10' greift, wobei die Greiferbacken vorzugsweise um das Rad 10' an die Felge angreifen, ohne die darauf befindliche Silikonschicht zu zerstören bzw. Kontamination zu verschleppen, und es aus dem Magazin 12 hebt.

Danach wird der Greifer 15 soweit verschoben bzw. verfahren (erste Verfahrrichtung), bis sich Rad 10' und Greifer 15 oberhalb der Achse befinden und der Greifer 15 abgesenkt wird, bis Radnabe des Rades 10' und Spürradachse fluchtend in einer Ebene liegen. Das neue Rad 10' wird dann auf die Radachse geschoben, wozu der Greifer 15 wieder entgegen seiner ersten Verfahrrichtung verfahren wird. Die Greiferbacken des Greifers 15 werden nunmehr auseinander gefahren und dieser wieder in seine Neutralposition überführt. Wenn sich der Spürradarm 16 wieder senkt, entfällt auch der Druck auf den Auslösemechanismus des Kugelsperrbolzens, das neue Spürrad 10' ist arretiert.

## Patentansprüche

1. Sondenhalterung (1) an einem insbesondere ABC- oder AC- Fahrzeug (11) bzw. Objekt zur Aufnahme wenigstens eines Sensors (3) und / oder einer Sonde (2) zur Messung von ABC-Kontaminationen, **dadurch gekennzeichnet, dass** die Halterung (1) und somit der Sensor (3) bzw. die Sonde (2) drehbar als auch schwenkbar sind, derart, dass sie in drei unterschiedlichen und unabhängig voneinander beweglichen Freiheitsgraden verstellt werden können, sodass verschiedene Betriebszustände für das Messen mit dem Sensor (3) bzw. mit der Sonde (2) angefahren werden können.

2. Sondenhalterung nach Anspruch 1, **dadurch gekennzeichnet, dass** die vier Betriebszustände ein Transportzustand, ein Luftspüren, ein Radspüren sowie ein Punktspüren sind.

3. Sondenhalterung nach Anspruch 2, **dadurch gekennzeichnet, dass** für das Luftspüren die Sonde (2) mit Hilfe der Sondenhalterung vom Fahrzeug (11) oder Objekt geführt wird, sodass die Umgebungsluft die Sonde (2) ohne Beeinträchtigung erreichen kann und zum Punktspüren die Sonde (2) bis auf den Boden (4) ausgefahren und auf diesen aufgesetzt wird.

4. Sondenhalterung nach Anspruch 3, **dadurch gekennzeichnet, dass** ein Anpressdruck des Sondenkopfes bzw. der Sonde (2) auf den Boden regulierbar und überwachbar ist.

5. Sondenhalterung nach Anspruch 3 oder 4, **dadurch gekennzeichnet, dass** die Sonde (2) vor dem Aufsetzen über eine horizontale Verstellmöglichkeit parallel zum Boden (4) verschoben werden kann, wobei eine Rotation um eine z-Achse erfolgt und zusätzlich der Abstand von der z-Achse geändert werden kann, sodass die Sonde (2) an jedem Ort innerhalb einer vorgegebenen Fläche senkrecht auf den Boden (4) aufgesetzt werden kann.

6. Sondenhalterung nach einem der Ansprüche 1 bis 4, **dadurch gekennzeichnet, dass** die Höhenverstellung durch eine Linearführung geschieht.

7. Sondenhalterung nach einem der Ansprüche 1 bis 5, **dadurch gekennzeichnet, dass** der Sensor (3) an der Sonde (2) gegenüberliegenden Ende einer Quertraverse angebracht ist, sodass für eine Messung der Bodentemperatur die Halterung (1) knapp über das Bodenniveau gefahren und der Sensor (3) mit einer weiteren Vorrichtung (5) weiter abgesenkt bzw. geschwenkt wird.

8. Sondenhalterung nach Anspruch 6, **dadurch gekennzeichnet, dass**, wenn der Kontakt mit dem Boden (4) ausreichend ist, ein integrierter Endschalter den Absenkvorgang beendet.

9. Sondenhalterung nach einem der Ansprüche 1 bis 7, **dadurch gekennzeichnet, dass** für das Radspüren die Sonde (2) an schwenkbare Spürräder (10) herangeführt wird.
